# EUROPEAN PATENT APPLICATION

(11) **EP 4 699 765 A1**
(43) Date of publication of application: **25.02.2026**
(21) Application number: 24306372.4
(22) Date of filing: 19.08.2024
(51) Int. Cl.: B27N 1/00, B27N 1/02, B27N 3/28, B27N 5/00, B33Y 70/10, B27N 3/02, B29B 9/14, C08L 97/02

(54) **COMPOSITE MATERIAL SUITABLE FOR ADDITIVE MANUFACTURING AND ESPECIALLY FUSED DEPOSITION MODELING**

(71) Applicant: Europeenne de Biomasse, 75009 Paris (FR); Université De Reims Champagne-Ardenne, 51100 Reims (FR); Institut National de la Recherche pour l'Agriculture, l'Alimentation et l'Environnement, 75007 Paris (FR); New Zealand Forest Research Institute Limited, 3010 Rotorua (NZ)
(72) Inventor: AUDIBERT, Edwige, 51100 Reims (FR); BARBIER, Maxime, 3010 Rotorua (NZ); LE GUEN, Marie Joo, 3010 Rotorua (NZ); MARTEL, Frédéric, 51100 Reims (FR); MAYER-LAIGLE, Claire, 3010 Rotorua (NZ); PAËS, Gabriel, 51360 Beaumont sur Vesle (FR); QUINTERO-MARQUEZ, Adriana, 78110 Le Vesinet (FR); RÉMOND, Caroline, 51170 Ville en Tardenois (FR)
(74) Representative: Jacobacci Coralis Harle

(57) **Abstract**

The invention relates to a material, suitable for additive manufacturing and in particular for fused deposition modeling, wherein said composite material is obtained by fusion of at least two components:
- at least one polymer matrix chosen among polyhydroxyalkanoates (PHA), and
- at least one auxiliary filler chosen among biobased fillers consisting of biobased particles comprising lignin, cellulose and hemicellulose,
wherein said biobased particles have a lignin/hemicellulose mass ratio from 1 to 6.

The invention also relates to an additive manufacturing process and a product obtained by an additive manufacturing process.

## Description

### Technical field of the invention

The invention relates to the technical field of additive manufacturing, especially fused deposition modelling (FDM), for the manufacture of preferably biobased and/or biodegradable plastic materials.

In particular, the invention relates to a composite material that enables the production of a biobased composite filament, especially a fully biobased composite filament, which is itself suitable to produce 3D printing products, such as a package product or a biomedical product. The invention also aims at providing a process for the preparation of such a composite material, an additive manufacturing (AM) process, preferably a FDM process, comprising the use of said composite material. Finally, the invention also deals with a product obtained by said additive manufacturing process.

### State of the art

Plastic materials are key in today's world, finding applications in a variety of industries, including consumer products, automotive, agriculture, aerospace, electronics and health care. While plastics continue to be popular due to their durability, adaptability, and cost effectiveness, the continual depletion of petroleum resources to produce plastic materials and the environmental pollution caused by plastic disposal has aroused global concern. Efforts have been made globally to deal with the increasing amounts of plastic waste and to develop sustainable industrial materials.

Bioplastics are a promising complement to conventional plastics since they are biocompatible and have the potential for biodegradability. Bioplastics are defined as plastics that are either derived from renewable natural resources (bioderived) and/or biodegradable.

The products made from these bioplastics may be produced by 3D printing, also known as additive manufacturing (AM). This is a new way of designing and producing functional objects by minimizing the quantity of material used, compared to subtractive techniques.

Fused deposition modeling (FDM), an extrusion-based technology, is one of the most used AM techniques. FDM may be performed from a composite material, generally a bioderived composite material, comprising at least a polymer matrix and one auxiliary filler. Composite materials are typically produced with an extrusion compounding process where the polymer matrix and the possible auxiliary fillers are melt blended. Then, the composite material is used to produce the filament through melt extrusion. Then, the filament is mechanically fed into a hot-end system, where it is melted. It is then extruded through a nozzle onto a pre-heated bed. As the material cools, successive layers are printed, gradually building the desired object.

Bioplastics are made from biomaterials using biobased and biodegradable plastic matrices, such as polylactic acid (PLA) or polyhydroxyalkanoates (PHA).

PLA is one of the commonly used biobased polymers that enable to produce bioplastic products. It offers the advantage of being readily available, environment friendly to a certain extent, and cost-effective with good mechanical properties: high mechanical strength and stiffness, and water resistance. Lactic acid is produced by microbial fermentation from starch or sugar and is further polymerized through chemical approaches. PLA is biodegradable under specific conditions such as industrial composting following ISO 14855 standard requiring aerobic conditions, high temperature (around 60°C) and high humidity (around 60%).

Recent years have seen the development of new biopolymers that can be of great interest such as polyhydroxyalkanoates (PHAs). PHAs are natural biodegradable polyesters that are produced by some bacteria cultivated onto sugars, amino acids or fatty acids. Moreover, they are biodegradable under anaerobic conditions with an active microbial environment, making them stable in humid air. The lengths of the carbon and the radical chains can result in different types of PHAs which can exhibit vastly different physicochemical properties. Numerous companies produce and commercialize PHAs.

Poly(3-hydroxybutyrate-co-3-hydroxyvalerate) or PHBV, is a copolymer of polyhydroxybutyrate (PHB) and polyhydroxyvalerate (PHV) both of which belong to PHA group. Among all the PHA commercially available, PHBV has favorable properties that make it an attractive option. PHBV can be less brittle than other PHAs, such as PHB for example, and can have a higher fluidity. The specific characteristics of PHBV, including its physicochemical and mechanical properties are highly dependent on the amount of 3-hydroxyvalerate (3HV) present. This means PHBV can exhibit either superior or inferior properties compared to PHB. However, PHA is marked by certain limitations such as low thermal stability and slow crystallization rates. These two drawbacks are limiting factors for filament production and 3D printing, which explains that there is no commercial PHA filament today that do not include additives or are not blended with other polymers.

Several challenges must be addressed when 3D printing biobased composite materials. Firstly, biobased matrices possess rheological properties that differ from those of petroleum-based products, making them more difficult to print. For example, the die swelling or bending effect is typically observed during the 3D printing of numerous biobased polymers. Additionally, nozzle clogging can occur due to the particle size of fillers, particularly in FDM where the nozzle diameter is typically narrow (<1mm). Another issue is achieving homogeneous dispersion of auxiliary fillers in the polymer matrix to prevent voids and ensure proper material support. The fluidity of the material is crucial for achieving uniform flow and adhesion to the previous layer. The viscosity must be sufficient to provide structural support and prevent material dispersion during printing, while it should be low enough to enable extrusion. Furthermore, challenges such as filament breakage, rough surface finish, and changes in porosity compared to the neat polymer are also reported. Lastly, the thermal stability of the polymer blend plays a critical role in successful 3D printing as it directly impacts the mechanical properties.

Thus, the development of new biobased and preferably biodegradable polymers and new composite material has become of increasing interest.

Hence, there is a real need for new biobased composite material formulations having interesting thermal and mechanical properties and which could be used as forming a filament suitable for 3D printing, especially in additive manufacturing technologies.

In particular, there is a need for new biobased composite material formulations that improves the thermal stability and the crystallization rate of PHA polymer matrix so as to form suitable filament intended to be used in 3D printing, especially in additive manufacturing technologies, and preferably for fused deposition modeling.

The aim of the present invention is, consequently, to propose novel biobased composite material formulations which at least partly avoid the abovementioned drawbacks.

### Presentation of the invention

In order to remedy the aforementioned drawback of the state of the art, the present invention proposes a new composite material, suitable for additive manufacturing and in particular for fused deposition modelling (FDM), wherein said composite material is obtained by fusion of at least two components:
- at least one polymer matrix chosen among polyhydroxyalkanoates (PHA), and
- at least one auxiliary filler chosen among biobased fillers consisting of biobased particles comprising lignin, cellulose and hemicellulose,
wherein said biobased particles have a lignin/hemicellulose mass ratio from 1 to 6.

The Applicant has unexpectedly found that the incorporation of the specific biobased particles comprising lignin, cellulose and hemicellulose (i.e.: comprising specific characteristics) into a PHA polymer matrix enables to produce a composite material which is generally fully biobased and which is suitable to form a filament for the additive manufacturing and this advantageously, without the addition of other polymer matrices or additives.

Surprisingly, the Applicant has found that the properties of a PHA polymer matrix is enhanced thanks to the addition of the specific biobased particles according to the invention. Indeed, they enable to improve the two main drawbacks of neat PHA, that is to say its low thermal stability and its slow crystallisation. It seems that addition of the biobased filler according to the invention having specific characteristics, to PHA polymer matrix, would increase its crystallization rate by initiating the nucleation process around biomass particles, and additionally would enhance the mechanical properties of the composite.

Furthermore, and as it will be shown in the experimental below, the specific biobased particles according to the invention allow to get satisfactory filament (i.e., no filament breakage) for fused deposition modeling having suitable properties when it is used, such as a sufficient fluidity, melt strength and thermal stability and a relatively low viscosity.

In addition, the incorporation of specific biobased particles comprising lignin, cellulose and hemicellulose, into the biobased matrix, aligns with the goals of biodegradability, while offering cost-effectiveness due to their widespread availability.

Therefore, composite materials combining polyhydroxyalkanoates (PHA), on the one hand, and specific biobased particles comprising lignin, cellulose and hemicellulose, on the other hand, are suitable for a huge range of applications where biobased, biocompatible (depending on the type of filler) and biodegradable composite materials are desired.

Other non-limiting and advantageous characteristics of the composite material in accordance with the invention, taken individually or in all technically possible combinations, are the following:
- said polyhydroxyalkanoates (PHA) of said at least one polymer matrix are chosen among: polyhydroxybutyrate (PHB), preferably among poly(3-hydroxybutyrate-co-3-hydroxyvalerate) (PHBV), polyhydroxyvalerate (PHV), polyhydroxyhexanoate (PHH), polyhydroxyoctanoate (PHO), and their copolymers;
- said biobased particles have also a specific surface area greater than 900 cm²/cm³, for example from 900 cm²/cm³ to 10 000 cm²/cm³;
- said composite material comprises from 5% to 40% w/w of said biobased fillers;
- said composite material comprises from 1×10⁵ to 8×10⁷ biobased particles per g of composite material;
- said biobased particles have a median size from 1 to 200 µm, preferably from 5 to 100 µm, preferably from 10 to 50 µm;
- said composite material is in a form chosen among filaments or pellets having preferably a particles size from 1 mm to 10 mm or powder;
- said biobased particles are chosen among agricultural byproduct and wood powder or mixture thereof, such as hemp core powder, flax shives, maritime pine bark powder.

The invention also relates to a process for preparation of a composite material such as defined above, comprising the following steps:
- a mixing step, wherein said at least one polymer matrix and said at least one auxiliary filler are mixed to obtain a mixture,
- a fusion step, wherein said mixture is subjected to extrusion to obtain a fused mixture,
- a solidification step, wherein said fused mixture is solidified to form said composite material.

Preferably, at the solidification step, the composite material consists of pellets.

In particular, the process comprises an additional extrusion step to obtain the composite material in filament form, or
the process comprises a subsequent step wherein the pellets are grounded into a powder, and wherein the process may comprise an additional extrusion step to obtain the composite material in filament form.

Advantageously, the process comprises, prior said mixing step, a treatment step wherein the biobased particles of the auxiliary filler are subjected to a physical treatment, e.g. thermochemical or mechanical treatments, e.g. steam explosion treatment or milling treatment.

According to a characteristic of the invention, the treatment step, such as the thermochemical treatment, is conducted at a temperature ranging from 130°C to 220°C.

According to another characteristic of the invention, the treatment step, such as a milling treatment or a grounded treatment, is conducted at room temperature.

The invention also deals with an additive manufacturing process, preferably fused deposition modeling or pellet printing, comprising a step of bounding a composite material such as defined above, preferably with the following parameters:
- a temperature ranging from 50°C to 200°C,
- layer height from 0.1 mm to 0.5 mm.

Finally, the invention also concerns a product obtained by an additive manufacturing process such as defined above.

Of course, the different characteristics, variants and embodiments of the invention can be associated with each other in various combinations insofar as they are not incompatible or exclusive of each other.

### Detailed description of the invention

### A) Definitions

The terms "comprise" (and any grammatical variation thereof, such as "comprises" and "comprising"), "have" (and any grammatical variation thereof, such as "has" and "having"), "contain" (and any grammatical variation thereof, such as "contains" and "containing"), and "include" (and any grammatical variation thereof, such as "includes" and "including") are open-ended linking verbs. They are used to specify the presence of stated features, integers, steps or components or groups thereof, but do not preclude the presence or addition of one or more other features, integers, steps or components or groups thereof. As a result, a method, or a step in a method, that "comprises," "has," "contains," or "includes" one or more steps or elements possesses those one or more steps or elements, but is not limited to possessing only those one or more steps or elements.

Unless otherwise indicated, all numbers or expressions referring to quantities of ingredients, ranges, reaction conditions, etc. used herein are to be understood as modified in all instances by the term "about."

Also, unless otherwise indicated, the indication of an interval of values « from X to Y » or "between X to Y", according to the present invention, means as including the values of X and Y.

As used herein, the term "powder" refers to a material that is suitable for additive manufacturing and this material is in a powder form. The powder is typically formed of particles or particulates.

As used herein, the term "particles" or "particulates" means the smallest entity that can be identified as a particulate from its appearance among the powder.

The term "size" advantageously means a physical characteristic size of the particles linked to a method of measurement (or dimensional analysis by an appropriate technique), for example by laser diffraction or sieving or image analysis.

The size of a solid particle, and more generally of a constituent of a powder, advantageously corresponds to its "equivalent sphere diameter" or "equivalent sphere diameter", that is to say advantageously the diameter in volume (dv) defined as the diameter of a perfect sphere having the same volume in the analysis as the solid particle studied.

The particle size of these particles, and in particular the particle size distribution, is advantageously defined by a value of D50 or d50, also called "median size" or "median diameter".

The D50 represents the particle size for which 50% of the volume (or mass) has a lower (or higher) particle size; in other words, the D50 is the diameter corresponding to 50% of the cumulative frequency in number, mass or volume.

Thus, as used herein, the "median size" with respect to the composite particles means advantageously the 50th percentile particle diameter (volume median particle diameter, D50) in its size distribution by volume (e.g., measured by a particle size analyzer based on laser diffraction/scattering spectroscopy).

The particle size distributions can be measured by laser diffraction using for example a LS 13 320 XR particle sizer in a dry way (Beckman & Coulter).

As used herein, additive manufacturing (or "3D printing") processes involve advantageously the stacking of one or more layers of material to create a final shape or an object near the final shape. This process allows for the production of complex and precise parts from digital models, creating three-dimensional (3D) objects by successively adding thin layers of material.

In the present invention and as detailed hereafter, additive manufacturing process may be selected among on the following technique: fused deposition modelling direct printing, injection printing and selective laser sintering and is advantageously fused deposition modelling (FDM) or pellet printing.

Especially, FDM creates 3D structures through the layer-by-layer melt extrusion of a plastic filament. It consists of a polymeric filament, which is delivered from a coil and melts as it passes through an extruder, where it reaches its melting point. The production of a printed structure involves the generation of a digital design of the model by 3D design software and its execution by the printer until the complete model is reproduced. In particular, this technique is controlled by a rapid prototype (RP) computer, that can produce parts made of materials through the layer-by-layer manufacturing method. FDM generally involves the generation of a digital design using a 3D design software, which is subsequently sliced into a series of laminations or layers. This layer data is communicated to the printer which reproduces the design layer-by-layer until the complete model is obtained. The mechanical properties of FDM printed parts depends on the material, the structural parameters (i.e. rasters angle, infill density, printing orientation, and stacking sequence), and manufacturing variables (i.e. printing speed, extrusion temperature and rate, layer time, nozzle transverse speed, and bed temperature). FDM RP has certain advantages such as control of the matrix architecture (shape, size, branching, geometry, interconnectivity, and orientation), producing a structure that can vary in design, and composition according to the material used.

As used herein, a "biobased" material is a material intentionally made from substances derived from living or once-living organisms, i.e., which are derived from plant- or animal-based materials such as wood, plant or agricultural byproducts.

In other words, a material can also be defined as bio-based if it derives in whole, or in part, from biomass resources, i.e., organic materials that are renewable.

Also, according to the invention, by "biodegradable" material, it is meant its ability to be degraded by microorganisms present in the natural environment. The action of microorganisms, such as bacteria or fungi on the material in the presence of water and oxygen transforms it, under ideal heat and time conditions, into carbon dioxide, mineral salts and water.

### B) The composite material

The Applicant sought to develop a new composite material, preferably a fully biobased composite material, that enables to improve the characteristics of a PHA polymer matrix, especially its thermal stability and its crystallization rate, so as to form a suitable filament for 3D printing, such as FDM.

For that purpose, the Applicant developed a new composite material, suitable for additive manufacturing and in particular for fused deposition modeling, wherein said composite material is obtained by fusion of at least two components:
- at least one polymer matrix chosen among polyhydroxyalkanoates (PHA), and
- at least one auxiliary filler chosen among biobased fillers consisting of biobased particles comprising lignin, cellulose and hemicellulose,
wherein said biobased particles have a lignin/hemicellulose mass ratio from 1 to 6.

In other words, each composite material comprises a mixture of:
- at least one polymer matrix chosen among polyhydroxyalkanoates (PHA), and
- at least one auxiliary filler consisting of biobased particles comprising lignin, cellulose and hemicellulose having specific characteristics.

By "fusion of at least two components", we mean advantageously the process in which a mixture of components is subjected to extrusion to form a unified, homogeneous material. In this context and as disclosed latter, the fusion step involves heating the mixture of at least one polymer matrix and at least one auxiliary filler until they blend together, resulting in a fused mixture wherein the biobased particles composing the auxiliary filler are dispersed into the melted polymer (i.e. the biobased particles do not melt) that is subsequently - almost instantaneously- solidified to create the final composite material.

### * The auxiliary filler

According to the invention, the auxiliary filler is chosen among biobased fillers consisting of biobased particles comprising lignin, cellulose and hemicellulose.

In particular, the biobased fillers and especially the biobased particles are advantageously obtained from natural products. Especially, biobased fillers, also named "biomass", are fillers that are based on a renewable raw material basis. In general, biobased particles of the invention may be chosen among agricultural byproduct and wood powder or mixture thereof.

The filler is advantageously a bio-based particulate or fibrous filler. Generally, the filler is a plant-based particulate or fibrous filler.

As used herein, "lignin" means a class of complex organic polymers that form key structural materials in the support tissues of most plants.

In the present embodiment, the cellulose refers to fibrous materials containing a natural polymer obtained from natural products. Cellulose is an organic compound with the formula (C₆H₁₀O₅)ₙ, a polysaccharide consisting of a linear chain of several hundred to many thousands of β(1→4) linked D-glucose units. As used herein, cellulose also enclose nanocelluloses, in particular cellulose nanofibrils (CNF). As used also herein, cellulose also enclose pure and purified cellulose, extracted for example from wood fiber.

According to the invention, "hemicellulose" corresponds to one of a number of heteropolymers (matrix polysaccharides), such as arabinoxylans, present along with cellulose in almost all terrestrial plant cell walls; hemicelluloses are branched, shorter in length (500-3,000 sugar units) than cellulose (7.000-15,000 glucose molecules), and also show a propensity to crystallize.

For instance, the biobased filler may be a lignocellulosic component. In general, a lignocellulosic component means a material composed of lignin, hemicellulose and cellulose (in varying proportions). As used herein, lignocellulosic components comprise lignocellulosic fibers. Lignocellulosic fibers can be of various origins including flax, hemp, jute, sisal, bamboo, wood, etc. For instance, one or more of the following biobased fillers in the form of particles (or the lignocellulosic components) may be suitable according to the present invention: hemp core powder, flax shives, maritime pine bark powder and oak powder.

Lignocellulosic components comprise also lignocellulosic pulp fibers that can be used to reinforce thermoplastics, e.g., Thermo-Mechanical Pulp (TMP), chemo-thermo-mechanical pulp and chemical pulp fibers.

The auxiliary filler according to the invention may also comprise: animal-derived fillers, in particular on animal derived fibers such as wool, hair, and silk, and fibers derived from feathers, e.g., chicken feathers. Where suitable, other parts of offal may also be used.

According to another characteristic, as a raw material (i.e. raw lignocellulosic component) for the process of preparation, the biobased fillers have advantageously a particle size of less than 500 microns, preferably less than 200 microns and ideally less than 50 microns.

Especially, these biobased particles comprising lignin, cellulose and hemicellulose particles have advantageously a median size from 1 to 200 µm, preferably from 5 to 100 µm, preferably from 10 to 50 µm. As used herein, a "median size from 1 to 200 µm" includes the following values and/or any intervals comprised between these values (in µm): 1; 2; 3; 4; 5; 6; 7; 8; 9; 10; 20; 30; 40; 50; 60; 70; 80; 90; 100; 110; 120; 130; 140; 150; 160; 170; 180; 190; 200.

Indeed, the Applicant has found on the one hand that an increase in particle size of the biobased particles tends (i.e.: higher than 200 µm) to result in less homogeneity of the material composite (i.e.: as the particles are bigger, they are fewer in number, making the composite less homogeneous). On the other hand, larger particles can also block the nozzle. Thus, it is preferable to decrease the particle size of the biobased particles so as to increase the accessibility of certain chemical groups, which will improve the compatibility between the polymer matrix and said biobased particles. Therefore, smaller biomass particles are preferred.

In general, the biobased particles are subjected to a physical treatment, e.g., thermochemical or mechanical treatments, e.g., steam explosion treatment, torrefaction or milling treatment (i.e.: ball-milling). This pretreatment aids in achieving good dispersion of the biobased particles in the polymer matrix and it has been found that they significantly impact the properties of the composites using injection processes. In addition, the Applicant has unexpectedly discovered that the physically treated raw powder (i.e.: raw lignocellulosic component powder) through thermal, mechanical, or thermomechanical treatment enables to overcome the drawbacks of printing PHA, such as warpage, poor adhesion to the print bed, and the rate and speed of crystallization.

According to a characteristic of the invention, the biobased particles or the raw lignocellulosic components/materials are not biologically degraded by enzymes before being incorporated into the PHA polymer matrix.

According to another characteristic of the invention, the biobased particles or the raw lignocellulosic components/materials do not undergo chemical treatment prior before being incorporated into the PHA polymer matrix.

According to the invention, these biobased particles have two main specific characteristics: their lignin/hemicellulose mass ratio and their specific area.

As used herein, a "lignin/hemicellulose mass ratio from 1 to 6" includes the following values and/or any intervals comprised between these values: 1; 1.1; 1.2; 1.3; 1.4; 1.5; 1.6; 1.7; 1.8; 1.9; 2.0; 2.1; 2.2; 2.3; 2.4; 2.5; 2.6; 2.7; 2.8; 2.9; 3.0; 3.1; 3.2; 3.4; 3.5; 3.6; 3.7; 3.8; 3.9; 4.0; 4.1; 4.2; 4.3; 4.4; 4.5; 4.6; 4.7; 4.8; 4.9; 5.0; 5.1; 5.2; 5.3; 5.4; 5.5; 5.6; 5.7; 5.8; 5.9; 6.0.

By "lignin/hemicellulose mass ratio from 1 to 6", it is advantageously understood as the proportion of the mass of lignin to the mass of hemicellulose in the biobased particles, where this ratio can vary from 1 (equal mass of lignin and hemicellulose) to 6 (six times the mass of lignin compared to hemicellulose). This ratio specifies the relative amounts of these two components within the biobased filler particles used in the composite material.

Preferably, the biobased particles have a specific surface area greater than 900 cm²/cm³, for example from 900 cm²/cm³ to 10 000 cm²/cm³.

Also, as used herein, a "specific surface area greater than 900 cm²/cm³" includes the following values and/or any intervals comprised between these values (in cm²/cm³): 900; 950; 1000; 1500; 2000; 2500; 3000; 3500; 4000; 4500; 5000; 5500; 6000; 6500; 7000; 7500; 8000; 8500; 9000; 9500; 10000.

By "specific surface area greater than 900 cm²/cm³", it is advantageously understood as the total surface area of the particles per volume unit being at least 900 cm² for each cubic centimeter. This measurement indicates the extent of the surface of the biobased particles that is available for interaction or reaction, and in this context, it means the biobased particles have a large surface area relative to their volume, which enhances their performance in composite materials.

According to a characteristic of the invention, the composite material comprises from 5% to 40% w/w of said biobased fillers.

As used herein, a "content from 5% to 40% w/w of said biobased fillers" includes the following values and/or any intervals comprised between these values (in %): 5; 6; 7; 8; 9; 10; 11; 12; 13; 14; 15; 18; 19; 20; 22; 24; 26; 28; 30; 32; 34; 36; 38; 40.

According to another characteristic of the invention, the composite material comprises from 1*10⁵ to 8*10⁷ biobased particles per g of composite material.

Also, as used herein, a range from "1*10⁵ to 8*10⁷ biobased particles per g of composite material" includes the following values and/or any intervals comprised between these values (per g of composite material): 1× 10⁵ ; 2x 10⁵; 3x 10⁵ ; 410⁵; 5 × 10⁵ ; 6 × 10⁵; 7 × 10⁵ ; 8 × 10⁵; 9 × 10⁵ ; 1 × 10⁶; 2 × 10⁶ ; 3 × 10⁶; 4 × 10⁶; 5 × 16⁶; 6 × 10⁶; 7 × 10⁶; 8 × 10⁶; 9 × 10⁶; 1 × 10⁷; 2 × 10⁷; 3 × 10⁷; 4 × 10⁷; 5 × 10⁵; 6 × 10⁷; 7 × 10⁷; 8 × 10⁷.

In general, and preferably, the auxiliary filler only contains the biobased particles such as described above. In other words, the auxiliary filler does not contain any other additives.

### * The polyhydroxyalkanoates (PHA) polymer matrix

According to the invention, the polymer matrix is chosen among polyhydroxyalkanoates (PHA).

As used herein, polyhydroxyalkanoates (or PHAs) are advantageously polyesters produced in nature by numerous microorganisms, including through bacterial fermentation of sugars or lipids.

Polyhydroxyalkanoates is a biopolymer coming from renewable resources and being biodegradable, as disclosed for example in Giubilini, A.; Bondioli, F.; Messori, M.; Nyström, G.; Siqueira, G. Advantages of Additive Manufacturing for Biomedical Applications of Polyhydroxyalkanoates. Bioengineering 2021, 8, 29. https://doi.org/10.3390/ bioengineering8020029 or in Mehrpouya et al., Additive manufacturing of polyhydroxyalkanoates (PHAs) biopolymers: Materials, printing techniques, and applications, Materials Science and Engineering: C, Volume 127, August 2021, 112216.

Polyhydroxyalkanoates have advantageously the following formula (I) 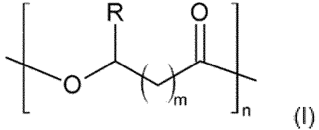
wherein R is a hydrogen atom or an alkyl side chain (linear PHA or branched PHA) having advantageously from 1 to 15 carbon atoms,
m is chosen among 1, 2, 3 or 4,
n is ranging advantageously from 100 to 45,000

In the invention, depending on the length of the monomer, polyhydroxyalkanoates are advantageously chosen among three types of PHAs:
- when said monomer has 3 to 5 carbon atoms, PHAs have a short side chain, denoted scl-PHA (short chain length-PHA),
- when said monomer has 6 to 14 carbon atoms, PHAs have a medium side chain, denoted mcl-PHA (medium chain length-PHA),
- when said monomer has more than 15 carbon atoms, PHAs have a long side chain, noted Icl-PHA (long chain length-PHA).

In practice, in the present invention, polyhydroxyalkanoates are advantageously chosen among:
- polyhydroxybutyrate (PHB), preferably among poly(3-hydroxybutyrate-co-3-hydroxyvalerate) (PHBV);
- polyhydroxyvalerate (PHV),
- polyhydroxyhexanoate (PHH),
- polyhydroxyoctanoate (PHO),
and their copolymers.

Thus, as used herein, polyhydroxyalkanoates (PHA) enclose homopolymer and copolymers.

Polyhydroxybutyrate (PHB) is advantageously chosen among poly(3-hydroxybutyrate) (P3HB) or poly-4-hydroxybutyrate (P4HB).

Copolymers of polyhydroxyalkanoates are advantageously chosen among:
- poly(3-hydroxybutyrate-co-3-hydroxyvalerate) (PHBHV or PHBV), or
- poly(3-hydroxybutyrate-co-3-hydroxyhexanoate) (PHBHHx).

In the present invention, polyhydroxyalkanoates are advantageously synthetized:
- by bacterial fermentation, or
- in some transgenic plants.

Polyhydroxyalkanoates are advantageously either thermoplastic or elastomeric materials.

The composite material comprises advantageously from 60 to 95 % w/w, preferably from 70 to 90 % w/w, more preferably from 75 to 80 % w/w of said polyhydroxyalkanoates. As used herein, a "content from 60% to 95% w/w of said polyhydroxyalkanoates" includes the following values and/or any intervals comprised between these values (in %): 60; 61; 62; 63; 64; 65; 66; 67; 68; 69; 70; 71; 72; 73; 74; 75; 76; 77; 78; 79; 80; 81; 82; 83; 84; 85; 86; 87; 88; 89; 90; 91; 92; 93; 94; 95.

For instance, the composite material comprises advantageously from 5 % to 40 % w/w, preferably from 8 % to 30 % w/w, more preferably from 10 to 20 % w/w of said biobased fillers and from 60% to 95%, preferably from 70% to 92% w/w, more preferably from 80% to 90% of said one polymer matrix chosen among polyhydroxyalkanoates (PHA).

In general, the weight percentage of said at least one polymer matrix chosen among polyhydroxyalkanoates (PHA), and of said at least one auxiliary filler chosen among biobased fillers, are advantageously adjusted to reach 100 % w/w, if necessary, possibly in combination with other suitable auxiliary matrices.

Especially and preferably, the PHA polymer matrix is the sole polymer matrix which is used for forming the composite material according to the invention.

In general, the composite material is in a form chosen among:
- filaments, or
- pellets having preferably particles size from 1 to 10 mm, or
- powder.

In general, and advantageously, a filament is a thin, continuous strand of material that is typically used in 3D printing processes such as fused deposition modeling (FDM). It is produced by extruding a composite material through a filament maker, resulting in a strand that can be fed into a 3D printer's hot-end system where it is melted and then deposited layer-by-layer to form a three-dimensional object.

Advantageously, a pellet is a small, solid piece of material, usually cylindrical, that is produced during the solidification step of the composite material preparation process. Pellets are typically about 1mm in size and are formed by cooling and cutting the extruded strands of the composite material. These pellets can later be re-extruded to form filaments for use in 3D printing.

As used herein, a "particles size from 1 to 10 mm" includes the following values and/or any intervals comprised between these values (in mm): 1; 2; 3; 4; 5; 6; 7; 8; 9; 10.

Indeed, as it will be described below, the composite material is obtained by fusion of the PHA polymer matrix and the auxiliary filler. In general, after the solidification step, it is then put in a pellet form and subsequently into a filament from.

Advantageously, the process may comprise a subsequent step wherein the pellets are grounded into a powder.

Especially, the powder has advantageously a median size from 10 to 200 µm.

### C) The process of preparation of the composite material

Obviously, the various embodiments described above for the composite material also apply to this process of preparation of the composite material manufacturing and will not be repeated below (and inversely).

According to the invention, the composition material as defined above is prepared according to the following process comprising the following steps:
i - an optional pretreatment step
ii - a mixing step, wherein said at least one polymer matrix and said at least one auxiliary filler are mixed to obtain a mixture,
iii - a fusion step, wherein said mixture is subjected to extrusion to obtain a fused mixture,
iv - a solidification step, wherein said fused mixture is solidified to form said composite material.

Especially, the process comprises, prior said mixing step (ii), a pretreatment step (i) wherein the biobased particles of the auxiliary filler (such as the lignocellulosic component powder) is subjected to a physical treatment, e.g. thermochemical or mechanical treatments, e.g. steam explosion treatment, torrefaction or milling treatment.

In general, the pretreatment step is conducted at a temperature below 220°C, preferably ranges from 130°C to 220°C, especially ranges from 150°C to 205°C. As used herein, a "temperature below 220°C" includes the following values and/or any intervals comprised between these values (in °C): 220°C; 215°C; 210°C; 205°C; 204°C ; 203°C; 202°C; 201°C; 200°C; 199°C; 198°C; 197 °C; 196°C; 195°C; 194°C; 193°C; 192°C; 191°C; 190°C; 189°C; 188°C; 187°C; 186°C; 185°C; 180°C; 175°C; 170°C; 165°C; 160°C; 155°C; 150°C; 145°C; 140°C; 135°C; 130°C; etc.

Preferably, the residence time of this pretreatment step is below 20 minutes, preferably ranges from 2 min to 20 minutes, and typically ranges from 5 to 15 minutes. As used herein, a "residence time below 20 minutes" includes the following values and/or any intervals comprised between these values (in minutes): 20; 19; 18; 17; 16; 15; 14; 13; 12; 11; 10; 9; 8; 7; 6; 5; 4; 3; 2.

For instance, the pretreatment step, such as a steam explosion, is conducted at a temperature ranging from 150°C to 200°C, preferably ranging from 180°C to 200°C during a residence time (i.e. time of the treatment) ranging from 5 minutes to 18 minutes, preferably ranging from 5 minutes to 15 minutes, such as 12.5 minutes. The steam explosion generally takes place under steam pressure preferably from 1 to 3.5 MPa, in particular from 1 to 2.5 MPa and typically from 1.2 to 1.8 MPa.

Generally, the milling step is performed in a grinding media mill, but it can also be done in other types of mills such as pin mills, jet mills, etc. This step is in particular adapted to and/or configured to obtain the suitable median size of the biobased particles. The parameters are known or may be adapted from the skilled person and will not be described in further details hereafter. This milling treatment is in general conducted at room temperature (i.e.: about 15-35°C, without the requirement of a heating device).

Furthermore, in general, the torrefaction step takes place at ambient pressure, in the absence of oxygen and may be carried out at a temperature ranging from 150°C to 350°C, preferably ranging from 210°C to 300°C during a residence time (i.e., time of the pretreatment) ranging from 5 minutes to 18 minutes, preferably ranging from 5 minutes to 15 minutes, such as 12.5 minutes. Especially, the heating is performed by inert heat-transfer gas and/or conduction.

After this pretreatment step, in general from 30% to 80%, preferably from 40% to 70% of the biobased particles of the auxiliary filler (such as the lignocellulosic component powder) have an aspect ratio below or equal to 0.5 (the aspect ratio is measured for example with a particle shape analyzer such as Metrohm's quoted Camsizer X2 from Microtrac or LS 13 320 XR from Beckman Coulter).

In addition, after this pretreatment step, generally more than 50%, preferably from 50% to 95% and typically from 75% to 90% of the biobased particles of the auxiliary filler (such as the lignocellulosic component powder) have a sphericity below or equal to 0.8 (i.e.: meaning more fibers with higher length than width), more particularly more than 50% of the biobased particles have a sphericity above 0.6 (meaning that the pretreatment significantly reduces the length of the particles). The sphericity may be measured with a particle shape analyzer (such as Metrohm's quoted Camsizer X2).

According to one embodiment, the biobased particles or the lignocellulosic components powder (such as wood powder) may comprise, by weight, relative to their total weight,
- before the pretreatment from 25 to 40%, preferably from 30 to 35% of cellulose, from 10 to 30%, preferably from 15 to 25% of hemicelluloses and from 19 to 39%, preferably from 24 to 33% of lignin; and
- after the pretreatment, such as the thermochemical treatment, from 34 to 54%, preferably from 39 to 49% of cellulose, from 2 to 21%, preferably from 6 to 16% of hemicelluloses and from 21 to 41%, preferably from 26 to 36% of lignin.

Hence, in general, the pretreatment, especially the thermochemical treatment, decreases the weight content of hemicelluloses into the biobased particles as compared to the untreated ones and/or increases the specific surface area of the biobased particles.

Indeed, without being bonded by any theories it seems that a certain proportion of the hydroxyl groups present in lignin and polyphenols would have the potential of decreasing the warping effect observed during the printability of PHBV. However, it seems that a too high content of hydroxyl groups would make the polymer too fluid and would not allow the production of filaments suitable for FDM. Here, it seems that the use of pretreatment, i.e., physical treatment (thermochemical or mechanical treatment) enables to enhance the accessibility of the hydroxyl groups present in lignocellulosic biomass (without increasing their content, as a result). As mentioned above, this can be achieved either by reducing the proportion of hemicellulose (and thereby increasing the relative proportion of hydroxyl groups) through steam explosion or by increasing the specific surface area and the number of accessible sites through a fractionation step (milling and, if necessary, sieving).

According to another embodiment, the biobased particles or the lignocellulosic components powder (such as hemp core) may comprise (before treatment), by weight, relative to their total weight, from 28 to 48%, preferably from 33 to 43% of cellulose, from 11 to 31%, preferably from 16 to 26% of hemicelluloses and from 13 to 33%, preferably from 18 to 28% of lignin.

According to another embodiment, the biobased particles or the lignocellulosic components powder (such as pine park) may comprise (before treatment), by weight, relative to their total weight, from 8 to 28%, preferably from 13 to 23% of cellulose, from 2 to 22%, preferably from 7 to 7% of hemicelluloses and from 21 to 41%, preferably from 26 to 36% of lignin.

Generally, the mechanical pretreatment does not amend the composition of the biobased particles or of the lignocellulosic components powder.

In the mixing step (ii), the polymer matrix and the auxiliary filler are advantageously mixed (e.g. by magnetic stirring or homogenization).

In the fusion step (iii), the mixture obtained after mixing step (ii) is subjected to extrusion with preferably the following parameters:
- the temperature was gradually increased from 130°C to 200°C, preferably from 150°C to 195°C and then cooled down to 185°C at the end of the extruder;
- the rotation speed is higher than 100 rpm, preferably ranging from 110 rpm to 150 rpm and is typically from 110 to 130 rpm, such as 120 rpm;
- the feeding rate is higher than 3%, preferably ranging from 3% to 10% and is typically from 5% to 8%, such as 7%.

The fusion step may be repeated, for instance twice to ensure good homogeneity of the mixed.

The solidification step (iv) consists advantageously in a cooling step, preferably below 30°C and even below 20°C, e.g. from 5°C to 20°C. In general, the temperature of the cooling step is preferably below the melting temperature of the at least one polymer matrix. For instance, the strands obtained at the end of fusion step (iii) were cooled down using a water bath before being pelletized.

In the solidification step (iv), the fused mixture is solidified to form a composite material having a pellet form (generally 1 mm long).

Then, in general, pellets previously extruded were vacuum dried at 45°C overnight.

Moreover, in general, the process comprises an additional extrusion step to obtain the composite material in filament form. For instance, this step can be processed by using filament maker, such as the "3Devo Precision 350" (3Devo B.V., Utrecht, The Netherlands) filament maker equipped with a single screw.

In particular, the following parameters may be suitable to form 3D-printing filaments:
- a temperature range from 170°C to 190°C, then reduced to 170°C at the end of the extrusion,
- a screw speed higher than 2 rpm, preferably between 2.5 to 5 rpm, and typically from 3.0 to 4.0 rpm, such as 3.5 rpm and
- a filament diameter between 0.5 mm to 4 mm, preferably between 1.5 to 3.0 mm, such as 1.75 mm or 2.85 mm.

As it will be shown in the experimental part below, the specific characteristics of the process according to the invention enables to enhance the properties of PHA polymer matrix.

### D) Additive manufacturing and product obtained

The present invention also encloses additive manufacturing (AM), preferably fused deposition modeling, comprising a step of bounding a composite material according to the invention.

Additive manufacturing thus encloses advantageously FDM or "fused deposition modeling" (FDM), which is advantageously understood as an additive manufacturing process where a polymeric filament is delivered from a coil and melted as it passes through an extruder, reaching its melting point. This process involves the generation of a digital design of the model using 3D design software, which is then executed by the printer layer-by-layer until the complete model is reproduced.

The following parameters may be suitable to carry out the FDM:
- a temperature ranging from 50°C to 200°C, preferably from 60°C to 180°C;
- layer height from 0.1 mm to 0.5 mm.

As used herein, a "temperature ranging from 50°C to 200°C" includes the following values and/or any intervals comprised between these values (in °C): 50°C, 60°C, 70°C, 80°C, 90°C, 100°C, 110°C, 120°C, 130°C, 140°C, 150°C, 160°C, 170°C, 180°C, 190°C, 200°C.

As used herein, a "layer height from 0.1 mm to 0.5 mm" includes the following values and/or any intervals comprised between these values (in mm): 0.1 mm, 0.2 mm, 0.3 mm, 0.4 mm, 0.5 mm.

For instance, filaments may be printed using FDM 3D printing having the following parameters:
- bed and nozzle temperatures of 60°C and 180°C were used for PHBV filaments;
- a nozzle diameter of 0.7-0.8 mm with a layer height of 0.15-0.25 mm and an infill of 100%;
- print speed may be at 15-25 mm/s to avoid filament breakage during the printing;
- the raster angle was 90°.

The parameters of the FDM 3D printing can be adapted by a skilled person and will not be described in more detail hereafter.

The present invention also relates to the product obtained by additive manufacturing according to the invention.

This product has some advantages:
- sustainability: the use of biobased compounds makes the product more environmentally friendly compared to conventional materials, contributing to sustainability efforts;
- mechanical properties: the composite material offers improved mechanical properties, such as strength and durability, due to the optimized ratio of lignin and hemicellulose and with preferably the optimized specific surface parameter of the fillers,
- a low footprint production;
also, specific color can be obtained according to the selected starting materials, especially the selected auxiliary filler.

Obviously, the various embodiments described above for the composite material, or the process of preparation, also apply to this additive manufacturing and the product obtained and will not be repeated below.

Of course, various other modifications may be made to the invention within the scope of the appended claims.

### EXAMPLES

### 1. Materials

### 1.1. Biobased particles/ Lignocellulosic biomass powder

***Steam exploded oak powder (Ref powder: O5):*** Oak was collected from forests of Marne Department (Great-East Region, France) and were treated using continuous steam explosion (SE) at pilot-scale. Wood was first chopped into small pieces and woodchips were screened through a 16 mm sieve before entering the SE reactor. The wood was treated at 197.5°C for a residence time of 12.5 minutes. The resulting powder was sieved and the fraction below 200 µm was recovered for the purpose of this study.

***Hemp core powder (Ref powder: HC) and Pine Bark powder (Ref powder PB):*** Raw hemp core was provided by the French company Van Robaeyes Frères, and raw pine bark was purchased from the French company Botanic. The powders were obtained using a three-step milling process. First, the raw materials were pre-milled using a knife mill (SM300, Retsch) equipped with a 2 mm screen. After a drying step in an oven at 60°C for 24 hours, a second milling step was carried out using a beater mill (UPZ100, operating at 18,000 rpm) with a 0.3 mm screen. Finally, a fine milling step with a vibratory ball mill (SWECO) filled with 50 kg of milling media (25 kg of 12 mm diameter and 12 mm length cylpebs) was performed to obtain powder with a median particle size around 20 microns.

Particle size and specific surface were measured using laser diffraction with a LS 13 320 XR particle sizer in a dry way (Beckman & Coulter).

The biochemical composition of Hemp Core (HC) and Pine bark (PB) powder was determined for total cell wall monosaccharide composition following the methods described by Lahaye et al. (2020) [1], and for the lignin content by spectrophotometry following the acetyl bromide method [3] on samples weighting approximately 20 mg each. All the powder characteristics are summarized.

For the steam exploded powder (O5), monomeric sugars were quantified using a two-step H₂SO₄ hydrolysis. First, samples (10 mg) were stirred with 125µL of 12M H₂SO₄ solution for 2h at room temperature, then the mixture was diluted to 1M H₂SO₄ and incubated for 2h at 100°C. Monosaccharides were quantified by HPAEC-PAD (ThermoScientific DIONEX, USA). Klason lignin was quantified by gravimetry. Samples (300 mg) were mixed with 3mL of a 12M H₂SO₄ solution for 2h at room temperature. Distilled water (40mL) was added to obtain a 2M H₂SO₄ solution, and the mixture was incubated for 3h at 100°C. The solid fraction was recovered, washed and oven dried at 105°C for 20h. Samples were then calcinated at 550°C for 4h. After cooling, ash content and acid insoluble lignin content were determined.

The properties of biobased particles are summarized in table 1 below:

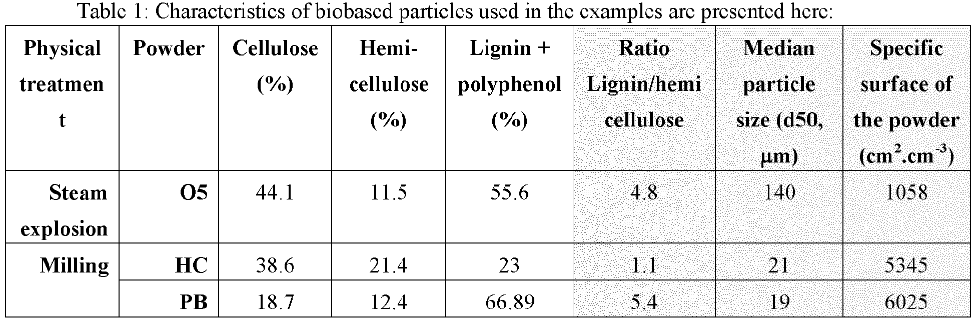

### 1.2. PHAs

The Poly(3-hydroxybutyrate-co-3-hydroxyvalerate) (PHBV), grade ENMAT^{™} Y1000P was purchased from TianAn Biopolymer (Ningbo City, China).

### 2. Process

Composite materials were produced according to the process described below.

**Composite pellets production:** prior to extrusion, the polymers PHA matrices and the biobased particles were dried at 45°C for 4 days in a vacuum oven. Biobased particles (10% w/w and 20% w/w for HC powder) and the PHAs pellets were mixed before being extruded. The different formulations tested are summarized in Table 2. The extrusion parameters were as follows: the temperature was gradually increased in the different zone of the extruder from 150°C to 195°C and cooled down to 185°C at the end of the extruder; rotation speed was set at 120 rpm with a feeding rate of 7%. The strands were cooled down using a water bath before being pelletized (1mm long). The first processed pellets were processed a second time using exactly the same process to increase their homogeneity.

**Table 2: Formulations Tested with Biobased Particles and PHA**

| **Name of the formulation** | **Biobased particles** | **% of biobased particles** |
|---|---|---|
| PHBV_10%O5 | Steam explosed Oak powder (O5) | 10% |
| PHBV_10%HC | Hemp core powder | 10% |
| PHBV_20%HC | Hemp core powder | 20% |
| PHBV_10%PB | Pine Bark powder | 10% |

**Filament production:** The pellets previously prepared were vacuum dried at 45°C. A 3Devo Precision 350 (3Devo B.V., Utrecht, The Netherlands) filament maker equipped with a single screw was used to produce filaments. The temperature in the different zone was set from 170°C to 190°C then reduced to 170°C at the end of the extrusion, screw speed was set at 3.5 rpm and filament diameter at 1.75 mm.

**3D printing:** Filaments were printed using FDM 3D printer Makergear M3-ID. Different tests specimens were printed using parameters summarized in table XX.

**Table 3: FDM printing parameters**

| **Printing parameters** | |
|---|---|
| Nozzle diameter | 0.75 mm |
| Bed temperature | 60°C |
| Nozzle temperature | 180°C |
| Layer height | 0.2 mm |
| Infill | 100% |
| Print speed | 20 mm/s |
| Raster angle | 90°C |

### 3. Results

The processability of the sample was evaluated through different tests. First, the ability to make filaments was assessed, followed by the ability to print specimen bone tests and technical objects.

**Ability to be processed into filament:** A formulation has been assessed as processable into filament if the formulated pellets allow the obtention of a filament with a regular diameter without any breaking during the process.

The different formulations were tested, and regular filaments were successfully obtained. The regularity of the filament was assessed by measuring its diameter at 15 randomly selected points on the spool. The mean and the coefficient of variation (CV) of the diameter (ratio of standard deviation to mean diameter) for each formulation are reported in Table 4. For all formulations, the CV is less than 10%, which highlights good reproducibility for filament production at the lab scale.

**Table 4: Mean diameter of the different formulation obtained**

| Name of the formulation | Mean diameter | CV of mean diameter (%) |
|---|---|---|
| PHBV_10%O5 | 1.80 mm | 5.5% |
| PHBV_10%HC | 1.71 mm | 9.1% |
| PHBV_20%HC | 1.69 mm | 7.3% |
| PHBV_10%PB | 1.53 mm | 4.4% |

**Ability to print specimen:** For each formulation, tensile and bending (flexural) test specimens were printed for mechanical testing. A way to determine the difficulty of printing PHA or its composites is related to the warping effect, illustrated for pure PHB that can be observed due to differences in crystallization time.

The warping effect has been quantified by the warping angle alpha. Measurements have been taken for each formulation on three specimens. The different values as well as the mean values are reported in Table 5. The low values obtained reflect the weak warping effect for all the formulations, which attests to their printability.

**Table 5: Warping angles of different formulations.**

| **Name of the formulation** | **Warping angle (°)** | | | |
|---|---|---|---|---|
| | Specimen 1 | Specimen 2 | Specimen 3 | Mean value |
| **PHBV_10%O5** | 3.4° | 1.9° | 0 | 1.8° |
| **PHBV_10%HC** | 2.7° | 3.5° | 1.8° | 2.7° |
| **PHBV_20%HC** | 3.5° | 3° | 1.6° | 2.7° |
| **PHBV_10%PB** | 7° | 6° | 5.5° | 6.2° |

**Ability to print complex object:** The ability to print complex objects has been tested on formulation O5. A shape featuring a Voronoi bear has been successfully printed along with a cantilevered support.

Accordingly, the specification and the examples disclosed therein are to be considered illustrative, with a true scope of the disclosure being disclosed by the following numbered claims.

## Claims

1. Composite material, suitable for additive manufacturing and in particular for fused deposition modeling, wherein said composite material is obtained by fusion of at least two components:
- at least one polymer matrix chosen among polyhydroxyalkanoates (PHA), and
- at least one auxiliary filler chosen among biobased fillers consisting of biobased particles comprising lignin, cellulose and hemicellulose,
wherein said biobased particles have a lignin/hemicellulose mass ratio from 1 to 6.

2. Composite material according to claim 1, wherein said biobased particles have a specific surface area greater than 900 cm²/cm³, preferably ranges from 900 cm²/cm³ to 10 000 cm²/cm³.

3. Composite material according to claim 1 or 2, wherein said polyhydroxyalkanoates (PHA) of said at least one polymer matrix are chosen among:
- polyhydroxybutyrate (PHB), preferably among poly(3-hydroxybutyrate-co-3-hydroxyvalerate) (PHBV),
- polyhydroxyvalerate (PHV),
- polyhydroxyhexanoate (PHH),
- polyhydroxyoctanoate (PHO),
and their copolymers.

4. Composite material according to any one of the preceding claims, wherein said composite material comprises from 5% to 40% w/w of said biobased fillers.

5. Composite material according to any one of the preceding claims, wherein said composite material comprises from 1×10⁵ to 8×10⁷ biobased particles per g of composite material.

6. Composite material according to any one of the preceding claims, wherein said biobased particles have a median size from 1 to 200 µm, preferably from 5 to 100 µm, in particular from 10 to 50 µm.

7. Composite material according to any one of the preceding claims, wherein said composite material is in a form chosen among:
- filaments, or
- pellets having preferably particles size from 1 mm to 10 mm;
- powder.

8. Composite material according to any one of the preceding claims, wherein said biobased particles are chosen among agricultural by-products and wood powder or mixture thereof, such as hemp core powder, flax shives, maritime pine bark powder and oak powder.

9. Process for preparation of a composite material according to any one of the claims 1 to 8, comprising the following steps:
- a mixing step, wherein said at least one polymer matrix and said at least one auxiliary filler are mixed to obtain a mixture,
- a fusion step, wherein said mixture is subjected to extrusion to obtain a fused mixture,
- a solidification step, wherein said fused mixture is solidified to form said composite material.

10. Process for preparation of a composite material according to claim 9, wherein, at the solidification step, the composite material consists of pellets.

11. Process for preparation of a composite material according to any one of the claims 9 or 10, wherein the process comprises an additional extrusion step to obtain the composite material in filament form, or
wherein the process comprises a subsequent step wherein the pellets are grounded into a powder.

12. Process for preparation of a composite material according to any one of the preceding claims 9 to 11, wherein the process comprises, prior said mixing step, a treatment step wherein the biobased particles of the auxiliary filler are subjected to a physical treatment, e.g. thermochemical or mechanical treatments, e.g. steam explosion treatment or milling treatment.

13. Process for preparation of a composite material according to claim 12, wherein the treatment step, such as the thermochemical treatment is conducted at a temperature ranging from 130°C to 220°C or the treatment step, such as the milling treatment, is conducted at room temperature.

14. Additive manufacturing process, preferably fused deposition modelling or pellet printing, comprising a step of bounding a composite material according to any one of the claims 1 to 8,
preferably with the following parameters:
- a temperature ranging from 50°C to 200°C,
- layer height from 0.1 mm to 0.5 mm.

15. Product obtained by an additive manufacturing process according to claim 14.
